(19) Europäisches Patentamt
European Patent Office
Office européen des brevets

(11) EP 1 169 744 B1

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(21) Anmeldenummer: **00918862.4**

(22) Anmeldetag: **07.04.2000**

(51) Int Cl.$^7$: **H01M 6/18**, G02F 1/15, H01M 10/40, H01G 9/02, G01N 27/26, H01M 4/02

(86) Internationale Anmeldenummer:
**PCT/EP2000/003131**

(87) Internationale Veröffentlichungsnummer:
**WO 2000/062362 (19.10.2000 Gazette 2000/42)**

(54) **NASS-IN-NASS-BESCHICHTUNGSVERFAHREN ZUR HERSTELLUNG VON VERBUNDKÖRPERN, DIE ZUR VERWENDUNG IN LITHIUMIONENBATTERIEN GEEIGNET SIND**

WET-ON-WET COATING METHOD FOR PRODUCING COMPOSITE BODIES THAT ARE SUITABLE FOR USE IN LITHIUM ION BATTERIES

PROCEDE DE REVETEMENT HUMIDE DANS HUMIDE POUR PRODUIRE DES CORPS COMPOSITES S'UTILISANT DANS DES BATTERIES ION-LITHIUM

(84) Benannte Vertragsstaaten:
**DE ES FR GB IT**

(30) Priorität: **09.04.1999 DE 19916042**

(43) Veröffentlichungstag der Anmeldung:
**09.01.2002 Patentblatt 2002/02**

(73) Patentinhaber: **BASF AKTIENGESELLSCHAFT**
**67056 Ludwigshafen (DE)**

(72) Erfinder:
- **BAUER, Stephan**
  **D-49179 Ostercappeln (DE)**
- **BRONSTERT, Bernd**
  **D-67166 Otterstadt (DE)**
- **MÖHWALD, Helmut**
  **D-76855 Annweiler (DE)**
- **TOBINAGA, Takeshi**
  **2-5-554 Yokkaichi (JP)**

(74) Vertreter: **Isenbruck, Günter, Dr.**
**Isenbruck, Bösl, Hörschler, Wichmann, Huhn, Patentanwälte**
**Theodor-Heuss-Anlage 12**
**68165 Mannheim (DE)**

(56) Entgegenhaltungen:
**EP-A- 0 379 372**
**EP-A- 0 859 417**
**EP-A- 0 892 454**
**WO-A-00/13249**
**WO-A-00/24068**
**WO-A-97/37397**
**US-A- 5 705 084**
**US-A- 5 778 515**

- **PATENT ABSTRACTS OF JAPAN vol. 1999, no. 05, 31. Mai 1999 (1999-05-31) & JP 11 031502 A (MATSUSHITA ELECTRIC IND CO LTD), 2. Februar 1999 (1999-02-02)**

EP 1 169 744 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft ein spezielles, sogenanntes Naß-in-Naß (wet coating)-Beschichtungsverfahren zur Herstellung von Verbundkörpem, die u.a. für elektrochemische Zellen mit Lithiumionenhaltigen Elektrolyten geeignet sind, sowie die Verwendung der so hergestellten Verbundkörper z.B. in oder als Lithiumionenbatterie, Batterie, Sensor, elektrochromes Fenster, Display, Kondensator und ionenleitende Folie.

Elektrochemische, insbesondere wiederaufladbare Zellen sind allgemein bekannt; beispielsweise aus "Ullmann's Encyclopedia of Industrial Chemistry", 5. Ed., Vol A3, VCH Verlagsgesellschaft mbH, Weinheim, 1985, Seite 343-397.

Unter diesen Zellen nehmen die Lithiumbatterien und die Lithiumionenbatterien insbesondere als Sekundärzellen aufgrund ihrer hohen spezifischen Energiespeicherdichte eine besondere Stellung ein.

Solche Zellen enthalten in der Kathode, wie u. a. in obigem Zitat aus "Ullmann" beschrieben, lithiierte Mangan-, Cobalt-, Vanadium- oder Nickel-Mischoxide, wie sie im stöchiometrisch einfachsten Fall als $LiMn_2O_4$, $LiCoO_2$, $LiV_2O_5$ oder $LiNiO_2$ beschrieben werden können.

Mit Verbindungen, die Lithiumionen in ihr Gitter einbauen können, wie z.B. Graphit, reagieren diese Mischoxide reversibel unter Ausbau der Lithiumionen aus dem Kristallgitter, wobei in diesem die Metallionen wie Mangan-, Cobalt- oder Nickelionen oxidiert werden. Diese Reaktion läßt sich in einer elektrochemischen Zelle zur Stromspeicherung nutzen, indem man die Lithiumionen aufnehmende Verbindung, also das Anodenmaterial, und das lithiumhaltige Mischoxid, also das Kathodenmaterial, durch einen Elektrolyten trennt, durch welchen die Lithiumionen aus dem Mischoxid in das Anodenmaterial wandern (Ladevorgang).

Die zur reversiblen Speicherung von Lithiumionen geeigneten Verbindungen werden dabei üblicherweise auf Ableitelektronen mittels eines Bindemittels fixiert.

Bei der Aufladung der Zelle fließen Elektronen durch eine äußere Spannungsquelle und Lithiumkationen durch den Elektrolyten zum Anodenmaterial. Bei der Nutzung der Zelle fließen die Lithiumkationen durch den Elektrolyten, die Elektronen hingegen durch einen Nutzwiderstand vom Anodenmaterial zum Kathodenmaterial.

Zur Vermeidung eines Kurzschlusses innerhalb der elektrochemischen Zelle befindet sich zwischen den beiden Elektroden eine elektrisch isolierende, für Lithiumkationen aber durchgängige Schicht. Dies kann ein sogenannter Festelektrolyt oder ein gewöhnlicher Separator sein.

Die Herstellung derartiger, für den Einbau in eine Lithiumionenbatterie geeigneter Verbundkörper, wie sie beispielsweise in der US 5,540,741 oder der US 5,478,668 beschrieben sind. erfolgte bislang nahezu ausschließlich durch herkömmliche Gießtechniken. D. h. es wurde zunächst eine Schicht des Verbundkörpers auf ein Substrat in der gewünschten Dicke aufgegossen und getrocknet. Nach dem vollständigen Trocknen dieser ersten Schicht wurde dann eine weitere Schicht des Verbundkörpers aufgebracht, wiederum getrocknet, usw.. Anschließend müssen die dort verwendeten Weichmacher noch extrahiert werden, was einen weiteren Arbeitsschritt bedeutet.

Ein Verfahren zur Herstellung eines mechanisch stabilen Verbundkörpers, der u.a. für die Verwendung in Lithiumionenbatterien geeignet ist, wird in der WO99/19917 der Anmelderin beschrieben. Gemäß dieser Anmeldung werden die einzelnen Schichten des Verbundkörpers zunächst z.B. auf eine temporäre Trägerfolie gegossen und getrocknet, ggf. einer Corona-Behandlung unterzogen und anschließend z.B. durch Heißlaminieren miteinander in Kontakt gebracht. Ferner beschreiben die WO98/44576 und die DE-A 197 13 046 ein Extrusionsverfahren zur Herstellung von Formkörpern für Lithiumionenbatterien, das die Schritte des Compoundierens und Schmelzextrudierens der Gemische aus denen die einzelnen Schichten des Verbundkörpers erhalten werden, umfaßt.

Der vorliegenden Erfindung lag nunmehr die primäre Aufgabe zugrunde, ein weiteres, gegenüber den aus dem Stand der Technik bekannten Verfahren vereinfachtes Verfahren zur Herstellung von für die Verwendung in Lithiumionenbatterien geeigneten, mechanisch stabilen Verbundkörpern bereitzustellen. Insbesondere sollte im Rahmen eines derartigen Verfahrens auf zusätzliche Schritte, wie die Extraktion von Weichmachern und aufwendiges Equipment verzichtet werden können.

Diese und weitere Aufgaben werden durch das Verfahren gemäß der vorliegenden Erfindung gelöst. Somit betrifft die vorliegende Erfindung Verfahren zur Herstellung eines Verbundkörpers umfassend

A) mindestens eine Substratfolie A, und darauf aufgebracht,

B) mindestens eine Separatorschicht B, die eine Mischung I, enthaltend ein Gemisch II, bestehend aus

a) 1 bis 95 Gew.-% eines Feststoffs III, vorzugsweise eines basischen Feststoffs III, mit einer Primärpartikelgröße von 5 nm bis 20 µm und

b) 5 bis 99 Gew.-% einer polymeren Masse IV, erhältlich durch Polymerisation von

b1) 5 bis 100 Gew.-% bezogen auf die Masse IV eines Kondensations produkts V aus

α) mindestens einer Verbindung VI, die in der Lage ist mit einer Carbonsäure oder einer Sulfonsäure oder einem Derivat oder einem Gemisch aus zwei oder mehr davon zu reagieren, und

β) mindestens 1 Mol pro Mol der Verbindung VI einer Carbonsäure oder Sulfonsäure VII, die mindestens eine radikalisch polymerisierbare funktionelle Gruppe aufweist, oder eines Derivats davon oder eines Gemischs aus zwei oder mehr davon

und

b2) 0 bis 95 Gew.-% bezogen auf die Masse IV einer weiteren Verbindung VIII mit einem mittleren Molekulargewicht (Zahlenmittel) von mindestens 5.000 mit Polyethersegmenten in Haupt- oder Seitenkette,

wobei der Gewichtsanteil des Gemisches II an der Mischung I 1 bis 100 Gew.-% beträgt,
oder
ein Polymer oder Copolymer des Vinylchlorids, Acrylnitrils, Vinylidenfluorids, Vinylchlorids mit Vinylidenchlorid, Vinylchlorids mit Acrylnitril, Vinylidenchlorids mit Hexafluorpropylen, Vinylidenfluorids mit Hexafluorpropylen und einem Mitglied ausgewählt aus der Gruppe bestehend aus Vinylfluorid, Tetrafluorethylen und einem Trifluorethylen
enthält,
und wobei die Schicht frei ist von einer elektronenleitenden, elektrochemisch aktiven Verbindung, und

C) mindestens eine Kathodenschicht C, die eine elektronenleitende, elektrochemisch aktive Verbindung, die in der Lage ist, beim Laden Lithiumionen abzugeben, enthält, oder

D) mindestens eine Anodenschicht D, die eine elektronenleitende, elektrochemische Verbindung, die in der Lage ist beim Laden Lithiumionen aufzunehmen, enthält, oder

mindestens eine Kathodenschicht C und mindestens eine Anodenschicht D,
dadurch gekennzeichnet, daß die mindestens eine Separatorschicht B und die mindestens eine Kathodenschicht C oder die mindestens eine Anodenschicht D oder die mindestens eine Kathodenschicht C und die mindestens eine Anodenschicht D durch ein Naß-in-Naß-Beschichtungsverfahren miteinander in Kontakt gebracht werden.

In einer bevorzugten Ausführungsform betrifft die vorliegende Erfindung ein Verfahren zur Herstellung eines Verbundkörpers, wobei der Verbundkörper ferner mindestens eine haftvermittelnde Schicht E umfaßt.

Im folgenden werden zunächst die einzelnen Schichten des erfindungsgemäß hergestellten Verbundkörpers detailliert beschrieben und anschließend auf die Verarbeitungsschritte des erfindungsgemäßen Verfahrens eingegangen.

Substratfolie A

Als Substratfolie A kann prinzipiell jede Folie verwendet werden, die mechanisch ausreichend stabil ist, um als Unterlage für die weiteren Schichten des Verbundkörpers zu dienen. Im einzelnen sind zu nennen: temporäre Trägerfolien auf Polyamid- oder Polyester-Basis, wie z.B. Nylon oder PET; Kunststoff-beschichtetes Papier; Polyolefinfolien; Glassubstrate, insbesondere ITO-beschichtete Glassubstrate; Folien auf der Basis von mikroporösem Polyethylen, die in Batterien im allgemeinen als konventionelle Separatoren verwendet werden und die Batterie aufgrund ihres Schmelzverhaltens mit einem sogenannten Shut-down-Mechanismus versehen. Derartige Folien sind u.a. in EP-A 0 715 364, EP-A 0 798 791 sowie DE-A 198 50 826 beschrieben. Vorzugsweise handelt es sich jedoch um mindestens ein Metall enthaltende Folie. Dies schließt sowohl mit Metall beschichtete oder bedampfte Substratfolien ein oder aber Metallfolien an sich, wobei unter letzteren wiederum typischerweise als Ableiterelektroden verwendete Metallfolien bevorzugt sind. Im einzelnen sind als besonders bevorzugte Ausführungsformen Cu-Folien als Ableiterkathode und Al-Folien als Ableiteranode zu nennen. Die Schichtdicke dieser Folien beträgt 5 bis 1000 μm, vorzugsweise 5 bis 100 μm, weiter bevorzugt 5 bis 30 μm.

Separatorschicht B

Der Begriff "Feststoff III" umfaßt alle unter Normalbedingungen als Feststoff vorliegenden Verbindungen, die bei Betrieb der Batterie unter den beim Laden von Batterien, insbesondere Lithiumionenbatterien, herrschenden Bedingungen weder Elektronen aufnehmen noch diese abgeben.

Als Feststoff III werden in dieser Schicht in erster Linie anorganische Feststoffe, vorzugsweise ein anorganischer basischer Feststoff, ausgewählt aus der Gruppe bestehend aus Oxiden, Mischoxiden, Silicaten, Sulfaten, Carbonaten, Phosphaten, Nitriden, Amiden, Imiden und Carbiden der Elemente der I., II., III. oder IV. Hauptgruppe oder der IV. Nebengruppe des Periodensystems; einem Polymer, ausgewählt aus der Gruppe bestehend aus Polyethylen, Polypropylen, Polystyrol, Polytetrafluorethylen, Polyvinylidenfluorid, Polyamiden, Polyimiden; einer Feststoffdispersion enthaltend ein derartiges Polymer; und einem Gemisch aus zwei oder mehr davon, eingesetzt.

Beispielhaft zu nennen sind insbesondere: Oxide, wie z.B. Calciumoxid, Siliciumdioxid, Aluminiumoxid, Magnesiumoxid oder Titandioxid, Mischoxide, beispielsweise der Elemente Silicium, Calcium, Aluminium, Magnesium, Titan; Silicate, wie z.B. Leiter-, Ketten-, Schicht- und Gerüstsilicate, vorzugsweise Wollastonit, insbesondere hydrophobierter Wollastonit, Sulfate, wie z.B. Alkali- und Erdalkalimetallsulfate; Carbonate, beispielsweise Alkali- und Erdalkalimetallcarbonate, wie z. B. Calcium-, Magnesium oder Bariumcarbonat oder Lithium-, Kalium oder Natriumcarbonat; Phosphate, beispielsweise Apatite; Nitride; Amide; Imide; Carbide; Polymere, wie z.B. Polyethylen, Polypropylen, Polystyrol, Polytetrafluorethylen, Polyvinylidenfluorid; Polyamide; Polyimide; oder andere Thermoplaste, Duromere oder Mikrogele. Feststoffdispersionen, insbesondere solche, die die oben genannten Polymere enthalten, sowie Gemische aus zwei oder mehr der oben genannten Feststoffe.

Weiterhin können als Feststoff III erfindungsgemäß anorganische Li-Ionen leitende Feststoffe, vorzugsweise ein anorganischer basischer Li-Ionen leitenden Feststoff eingesetzt werden.

Dabei sind zu nennen: Lithiumborate, wie z.B. $Li_4B_6O_{11}$ * $xH_2O$, $L_{13}(BO_2)_3$, $Li_2B_4O_7$ * $xH_2O$, $LiBO_2$, wobei x eine Zahl von 0 bis 20 sein kann; Lithium-Aluminate, wie z.B. $Li_2O$ * $Al_2O_3$ * $H_2O$, $Li_2Al_2O_4$, $LiAlO_2$; Lithium-Aluminosilicate, wie z.B. Lithium enthaltende Zeolithe, Feldspäte, Feldspatvertreter, Phyllo- und Inosilicate, und insbesondere $LiAlSi_2O_6$ (Spodumen), $LiAlSi_4O_{10}$ (Petullit), $LiAlSiO_4$ (Eukryptit), Glimmer, wie z.B. $K[Li,Al]_3[AlSi]_4O_{10}(F\text{-}OH)_2$,/$K[Li,Al,Fe]_3$ $[AlSi]_4O_{10}$ $(F\text{-}OH)_2$; Lithium-Zeolithe, insbesondere solche in Faser-, Blatt-, oder Würfel-Form, insbesondere solche mit der allgemeinen Formel $Li_{2/z}O$ * $Al_2O_3$ * $xSiO_2$ * $yH_2O$ wobei z der Wertigkeit entspricht, x 1,8 bis ca. 12 und y 0 bis ca. 8 ist; Lithium-Carbide, wie z.B. $Li_2C_2$, $Li_4C$; $Li_3N$; Lithium-Oxide und -Mischoxide, wie z.B. $LiAlO_2$, $Li_2MnO_3^-$, $Li_2O$, $Li_2O_2$, $Li_2MnO_4$, $Li_2TiO_3$; $Li_2NH$; $LiNH_2$; Lithiumphosphate, wie z.B. $Li_3PO_4$, $LiPO_3$, $LiAlFPO_4$, $Li\text{-}Al(OH)PO_4$, $LiFePO_4$, $LiMnPO_4$; $Li_2CO_3$; Lithium-Silicate in Leiter-, Ketten-, Schicht-, und Gerüst-Form, wie z.B. $Li_2SiO_3$, $Li_2SiO_4$ und $Li_6Si_2$; Lithium-Sulfate, wie z. B. $Li_2SO_4$, $LiHSO_4$, $LiKSO_4$; die bei der Diskussion der Kathodenschicht genannten Li-Verbindungen, wobei bei deren Verwendung als Feststoff III die Anwesenheit von Leitruß ausgeschlossen ist; sowie Gemische aus zwei oder mehr der oben genannten Li-Ionen leitenden Feststoffe.

Besonders geeignet sind dabei basische Feststoffe. Unter basischen Feststoffen sollen dabei solche verstanden werden, deren Gemisch mit einem flüssigen, Wasser enthaltenden Verdünnungsmittel, das selber einen pH-Wert von höchstens 7 aufweist, einen höheren pH-Wert als dieses Verdünnungsmittel aufweist.

Die Feststoffe sollten vorteilhaft in der als Elektrolyt verwendeten Flüssigkeit weitestgehend unlöslich sowie in dem Batteriemedium elektrochemisch inert sein.

Besonders geeignet sind Feststoffe, die eine Primärpartikelgröße von 5 nm bis 20 µm. vorzugsweise 0,01 bis 10 µm und insbesondere 0,1 bis 5 µm aufweisen, wobei die angegebenen Partikelgrößen durch Elektronenmikroskopie ermittelt werden. Der Schmelzpunkt der Festoffe liegt vorzugsweise über der für die elektrochemische Zelle üblichen Betriebstemperatur, wobei sich Schmelzpunkte von über 120°C, insbesondere von über 150°C, als besonders günstig erwiesen haben.

Dabei können die Feststoffe bzgl. ihrer äußeren Form symmetrisch sein, d.h., ein Größenverhältnis Höhe : Breite : Länge (Aspektverhältnis) von ungefähr 1 aufweisen und als Kugeln, Granalien, annähernd runde Gebilde, aber auch in Form von beliebigen Polyedern, wie z.B. als Quader, Tetraeder, Hexaeder, Octaeder oder als Bipyramide vorliegen, oder verzerrt oder asymmetrisch sein, d.h., ein Größenverhältnis Höhe : Breite : Länge (Aspektverhältnis) von ungleich 1 aufweisen und z.B. als Nadeln, unsymmetrische Tetraeder, unsymmetrische Bipyramiden, unsymmetrische Hexa- oder Octaeder, Plättchen, Scheiben oder als faserförmige Gebilde vorliegen. Sofern die Feststoffe als asymmetrische Teilchen vorliegen, bezieht sich die oben angegebene Obergrenze für die Primärpartikelgröße auf die jeweils kleinste Achse.

Als Verbindung VI, die in der Lage ist, mit einer Carbonsäure oder einer Sulfonsäure VII oder einem Derivat oder einem Gemisch aus zwei oder mehr davon zu reagieren, sind prinzipiell alle Verbindungen verwendbar, die dieses Kriterium erfüllen.

Vorzugsweise wird die Verbindung VI ausgewählt aus der Gruppe bestehend aus einem ein- oder mehrwertigen Alkohol, der in der Hauptkette ausschließlich Kohlenstoffatome aufweist; einem ein- oder mehrwertigen Alkohol, der in der Hauptkette neben mindestens zwei Kohlenstoffatomen mindestens ein Atom aufweist, das ausgewählt wird aus der Gruppe bestehend aus Sauerstoff, Phosphor und Stickstoff; einer Silicium enthaltenden Verbindung; einem mindestens eine primäre Aminogruppe aufweisenden Amin; einem mindestens eine sekündäre Aminogruppe aufweisenden Amin; einem Aminoalkohol; einem ein- oder mehrwertigen Thiol; einer Verbindung mit mindestens einer Thiol- und mindestens einer Hydroxylgruppe; und einem Gemisch aus zwei oder mehr davon.

Unter diesen sind wiederum Verbindungen VI bevorzugt, die zwei oder mehr funktionelle Gruppen aufweisen, die mit der Carbonsäure oder Sulfonsäure reagieren können.

Bei der Verwendung von Verbindungen VI, die als funktionelle Gruppe Aminogruppen enthalten, ist es bevorzugt, solche mit sekundären Aminogruppen zu verwenden, so daß nach der Kondensation/Vernetzung entweder überhaupt keine oder nur geringe Mengen an freien NH-Gruppen in der Mischung Ia vorhanden sind.

Im einzelnen sind als bevorzugte Verbindungen zu nennen:

ein- oder mehrwertige Alkohole, die in der Hauptkette ausschließlich Kohlenstoffatome aufweisen, mit 1 bis 20, vorzugsweise 2 bis 20 und insbesondere 2 bis 10 alkoholischen OH-Gruppen, insbesondere zwei-, drei- und vierwertige Alkohole, vorzugsweise mit 2 bis 20 Kohlenstoffatomen, wie z.B. Ethylenglycol, Propan-1,2-oder -1,3-diol, Butan-1,2- oder -1,3-diol, Buten-1,4- oder Butin-1,4-diol, Hexan-1,6-diol, Neopentylglycol, Dodecan-1,2-diol, Glycerin, Trimethylolpropan, Pentaerythrit oder Zuckeralkohole, Hydrochinon, Novolak, Bisphenol A, wobei jedoch auch, wie aus obiger Definition hervorgeht, einwertige Alkohole, wie z.B. Methanol, Ethanol, Propanol, n-, sek.- oder tert.-Butanol, usw. eingesetzt werden können; ferner können auch Polyhydroxyolefine, bevorzugt solche mit zwei endständigen Hydroxylgruppen, wie z.B. α,ω-Dihydroxybutadien, verwendet werden;

Polyesterpolyole, wie sie z.B. aus Ullmanns *Encyclopädie der technischen Chemie,* 4. Aufl., Bd. 19, S. 62-65 bekannt sind und beispielsweise durch Umsetzung zweiwertiger Alkohole mit mehrwertigen, bevorzugt zweiwertigen Polycarbonsäuren erhalten werden;

ein- oder mehrwertige Alkohole, die in der Hauptkette neben mindestens zwei Kohlenstoffatomen mindestens ein Sauerstoffatom enthalten, vorzugsweise Polyetheralkohole, wie z.B. Polymerisationsprodukte von Alkylenepoxiden, beispielsweise Isobutylenoxid, Propylenoxid, Ethylenoxid, 1,2-Epoxybutan, 1,2-Epoxypentan, 1,2-Epoxyhexan, Tetrahydrofuran, Styroloxid, wobei auch an den Endgruppen modifizierte Polyetheralkohole, wie z.B. mit $NH_2$-Endgruppen modifizierte Polyetheralkohole verwendet werden können; diese Alkohole besitzen vorzugsweise ein Molekulargewicht (Zahlenmittel) von 100 bis 5.000, weiter bevorzugt 200 bis 1.000, und insbesondere 300 bis 800; derartige Verbindungen sind an sich bekannt und beispielsweise unter den Marken Pluriol® oder Pluronic® (Firma BASF Aktiengesellschaft) kommerziell verfügbar;

Alkohole, wie oben definiert, in denen ein Teil oder alle Kohlenstoffatome durch Silicium ersetzt sind, wobei hier insbesondere Polysiloxane oder Alkylenoxid/Siloxan-Copolymere oder Gemische aus Polyetheralkoholen und Polysiloxanen, wie sie beispielsweise in der EP-B 581 296 und der EP-A 525 728 beschrieben sind. verwendet werden können, wobei auch bzgl. des Molekulargewichts dieser Alkohole das auch oben Gesagte gilt;

Alkohole, wie oben definiert, insbesondere Polyetheralkohole, bei denen ein Teil oder alle Sauerstoffatome durch Schwefelatome ersetzt sind, wobei bzgl. des Molekulargewichts dieser Alkohole ebenfalls das oben Gesagte gilt;

ein- oder mehrwertige Alkohole, die in der Hauptkette neben mindestens zwei Kohlenstoffatomen mindestens ein Phosphoratom oder mindestens ein Stickstoffatom enthalten, wie z.B. Diethanolamin und Triethanolamin;

Lactone, die sich von Verbindungen der allgemeinen Formel $HO-(CH_2)_z-COOH$ ableiten, wobei z eine Zahl von 1 bis 20 ist, wie z.B. ε-Caprolacton, β-Propiolacton, γ-Butyrolacton oder Methyl-ε-caprolacton;

eine Silicium enthaltende Verbindung, wie z.B. Di- oder Trichlorsilan, Phenyltrichlorsilan, Diphenyldichlorsilan, Dimethylvinylchlorsilan;

Silanole, wie z.B. Trimethylsilanol;

ein mindestens eine primäre und/oder sekundäre Aminogruppe aufweisendes Amin, wie z.B. Butylamin, 2-Ethylhexylamin, Ethylendiamin, Hexamethylendiamin, Diethylentriamin, Tetraethylenpentamin, Pentaethylenhexamin, Anilin, Phenylendiamin;

Polyetherdiamine, wie z.B. 4,7-Dioxydecan-1,10-diamin, 4,11-Dioxytetradecan-1,14-diamin;

ein ein- oder mehrwertiges Thiol, wie z.B. aliphatische Thiole, wie z.B. Methanthiol, Ethanthiol, Cyclohexanthiol, Dodecanthiol; aromatische Thiole, wie z.B. Thiophenol, 4-Chlorthiophenol, 2-Mercaptoanilin;

eine Verbindung mit mindestens einer Thiol- und mindestens einer Hydroxylgruppe, wie z.B. 4-Hydroxythiophenol sowie Monothioderivate der oben definierten mehrwertigen Alkohole;

Aminoalkohole, wie z.B. Ethanolamin, N-Methylethanolamin, N-Ethyl-ethanolamin, N-Butyl-ethanolamin, 2-Amino-1-propanol, 2-Amino-1-phenylethanol, Mono- oder Polyaminopolyole mit mehr als zwei aliphatisch gebundenen Hydroxylgruppen, wie z.B. Tris(hydroxymethyl)- methylamin, Glucamin, N,N'-Bis-(2-hydroxyethyl)-ethylendiamin.

Es können auch Gemische aus zwei oder mehr der oben definierten Verbindungen VI eingesetzt werden.

Die oben erwähnten Verbindungen VI werden erfindungsgemäß mit einer Carbonsäure oder Sulfonsäure VII, die mindestens eine radikalisch polymerisierbare funktionelle Gruppe aufweist, oder einem Derivat davon oder einem Gemisch aus zwei oder mehr davon kondensiert, wobei mindestens eine, vorzugsweise alle der freien zur Kondensation befähigten Gruppen innerhalb der Verbindungen VI mit der Verbindung VII kondensiert werden.

Als Carbonsäure oder Sulfonsäure VII können im Rahmen der vorliegenden Erfindung prinzipiell alle Carbon- und Sulfonsäuren, die mindestens eine radikalisch polymerisierbare funktionelle Gruppe aufweisen, sowie deren Derivate eingesetzt werden. Dabei umfaßt der hier verwendete Begriff "Derivate" sowohl Verbindungen, die sich von einer Carbon- oder Sulfonsäure ableiten, die an der Säurefunktion modifiziert ist, wie z. B. Ester, Säurehalogenide oder Säureanhydride, als auch Verbindungen, die sich von einer Carbon- oder

Sulfonsäure ableiten, die am Kohlenstoffgerüst der Carbon- oder Sulfonsäure modifiziert ist, wie z.B. Halogencarbon- oder -sulfonsäuren.

Als Verbindung VII sind dabei insbesondere zu nennen:

α,β-ungesättigte Carbonsäuren oder β,γ-ungesättigte Carbonsäuren.

Besonders geeignete α,β-ungesättigte Carbonsäuren sind dabei solche der Formel

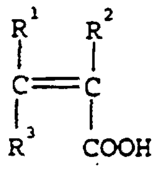

in der $R^1$, $R^2$ und $R^3$ Wasserstoff oder $C_1$- bis $C_4$-Alkylreste darstellen, wobei unter diesen wiederum Acrylsäure und Methacrylsäure bevorzugt sind; weiterhin gut einsetzbar sind Zimtsäure, Maleinsäure, Fumarsäure, Itaconsäure, oder p-Vinylbenzoesäure, sowie Derivate davon, wie z.B. Anhydride, wie z.B. Maleinsäure- oder Itaconsäureanhydrid;

Halogenide, insbesondere Chloride, wie z.B. Acryl- oder Methacrylsäurechlorid;

Ester, wie z.B. (Cyclo)alkyl(meth)acrylate mit bis zu 20 C-Atomen im Alkylrest, wie z.B. Methyl-, Ethyl-, Propyl-, Butyl-, Hexyl-, 2-Ethylhexyl-, Stearyl-, Lauryl-, Cyclohexyl-, Benzyl-, Trifluormethyl-, Hexafluorpropyl-, Tetrafluorpropyl(meth)-acrylat, Polypropylenglycolmono(meth)acrylate, Polyethylenglycolmono(meth)acrylate, Poly (meth)acrylate von mehrwertigen Alkoholen, wie z.B. Glycerindi(meth)-acrylat, Trimethylolpropan-di(meth) acrylat, Pentaerythrit-di- oder -tri(meth)acrylat, Diethylenglycolbis(mono-(2-acryloxy)ethyl)carbonat, Poly (meth)acrylate von Alkoholen, die selbst wiederum eine radikalisch polymeriserbare Gruppe aufweisen, wie z. B. Ester aus (Meth)acrylsäure und Vinyl- und/oder Allylalkohol;

Vinylester anderer aliphatischer oder aromatischer Carbonsäuren, wie z. B. Vinylacetat, Vinylpropionat, Vinylbutyrat, Vinylhexanoat, Vinyloctanoat, Vinyldecanoat, Vinylstearat, Vinylpalminat, Vinylcrotonoat, Divinyladipat, Divinylsebacat, 2-Vinyl-2-ethylhexanoat, Vinyltrifluoracetat;

Allylester anderer aliphatischer oder aromatischer Carbonsäuren, wie z. B. Allylacetat, Allylpropionat, Allylbutyrat, Allylhexanoat, Allyloctanoat, Allyldecanoat, Allylstearat, Allylpalminat, Allylcrotonoat, Allylsalicylat, Allyllactat, Diallyloxalat, Diallylmalonat, Diallytsuccinat, Diallylglutarat, Diallyladipat, Diallylpimelat, Diallylcinnatricarboxylat, Allylltrifluoracetat, Allylperfluorbutyrat, Allylperfluoroctanoat;

β,γ-ungesättigte Carbonsäuren oder deren Derivate, wie z. B. Vinylessigsäure, 2-Methylvinylessigsäure, Isobutyl-3-butenoat, Allyl-3-butenoat, Allyl-2-hydroxy-3-butenoat, Diketen;

Sulfonsäuren, wie z.B. Vinylsulfonsäure, Allyl- und Methallylsulfonsäure, sowie deren Ester und Halogenide, Benzolsulfonsäurevinylester, 4-Vinylbenzolsulfonsäureamid.

Es können auch Gemische aus zwei oder mehr der oben beschriebenen Carbonund/oder Sulfonsäuren eingesetzt werden.

Somit umfaßt die Separatorschicht B in einer Ausführungsform vorzugsweise eine Mischung I enthaltend ein Gemisch II, bestehend aus

a) 1 bis 95 Gew.-% eines Feststoffs III, vorzugsweise eines basischen Feststoff III, mit einer Primärpartikelgröße von 5 nm bis 20 μm und

b) 5 bis 99 Gew.-% einer polymeren Masse IV, erhältlich durch Polymerisation von

b1) 5 bis 100 Gew.-% bezogen auf die Masse IV eines Kondensationsprodukts V aus

α) einem mehrwertigen Alkohol VI, welcher in der Hauptkette Kohlenstoff- und Sauerstoffatome enthält,
und

β) mindestens 1 Mol pro Mol des mehrwertigen Alkohols VI einer α,β-ungesättigten Carbonsäure VII,
und

b2) 0 bis 95 Gew.-% bezogen auf die Masse IV einer weiteren Verbindung VIII mit einem mittleren Molekulargewicht (Zahlenmittel) von mindestens 5000 mit Polyethersegmenten in Haupt- oder Seitenkette,

wobei der Gewichtsanteil des Gemisches II an der Mischung I 1 bis 100 Gew.-% beträgt.

Als Verbindung VIII kommen in erster Linie Verbindungen mit einem mittleren Molekulargewicht (Zahlenmittel) von mindestens 5.000, vorzugsweise 5.000 bis 20.000.000, insbesondere 100.000 bis 6.000.000, in Betracht, die in der Lage sind, Lithiumkationen zu solvatisieren und als Bindemittel zu fungieren. Geeignete Verbindungen VIII sind beispielsweise Polyether und Copolymere, die mindestens 30 Gew.-% der folgenden Struktureinheit, bezogen auf das Gesamtgewicht der Verbindung VIII, aufweist:

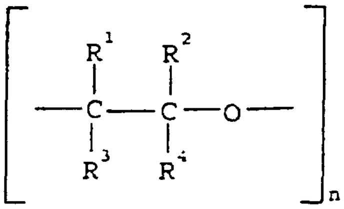

wobei $R^1$, $R^2$, $R^3$ und $R^4$ Arylgruppen, Alkylgruppen, vorzugsweise Methylgruppen, oder Wasserstoff darstellen, gleich oder unterschiedlich sein und Heteroatome wie Sauerstoff, Stickstoff, Schwefel oder Silizium enthalten können.

Solche Verbindungen sind beispielsweise in: M. B. Armand et. al., Fast Ion Transport in Solids, Elsevier, New York, 1979, S. 131-136, oder in FR-A 7832976 beschrieben.

Die Verbindung VIII kann auch aus Gemischen aus zwei oder mehr solcher Verbindungen bestehen.

Die Gemische II sollen erfindungsgemäß zu 1 bis 95 Gew.-%, vorzugsweise 25 bis 90 Gew.-% und insbesondere 30 bis 70 Gew.-% aus einem Feststoff III und zu 5 bis 99 Gew.-%, vorzugsweise 10 bis 75 Gew.-% und insbesondere 30 bis 70 Gew.-% aus einer polymeren Masse IV bestehen, wobei die Verbindung VIII der polymeren Masse IV vorteilhaft ein mittleres Molekulargewicht (Zahlenmittel) von 5.000 bis 100.000.000, vorzugsweise 50.000 bis 8.000.000, aufweisen sollte. Die polymere Masse IV kann durch Umsetzung von 5 bis 100 Gew.-%, vorzugsweise 30 bis 70 Gew.-% bezogen auf die polymere Masse IV einer Verbindung V und 0 bis 95 Gew.-%, insbesondere 30 bis 70 Gew.-% bezogen auf die polymere Masse IV einer Verbindung VIII, erhalten werden.

Zur Herstellung der erfindungsgemäß verwendeten Mischung, die ein erfindungsgemäß verwendetes Gemisch in Mengen von 1 bis 100 Gew.-%, vorzugsweise 35 bis 100 Gew.-% und insbesondere 30 bis 70 Gew.-%, bezogen auf die erfindungsgemäß verwendete Mischung enthalten sollte, kann ein Gemisch aus einem Feststoff III, eines Kondensationsprodukts V, gegebenenfalls einer Verbindung VIII und üblichen Zusatzstoffen wie z.B. Weichmachern, vorzugsweise polyethylenoxidhaltige oder polypropylenoxidhaltige Weichmachern, hergestellt werden.

In einer weiteren Ausführungsform umfaßt die Separatorschicht B Polymere und Copolymere des Vinylchlorids, Acrylnitrils, Vinylidenfluorids, Vinylchlorids mit Vinylidenchlorid, Vinylchlorids mit Acrylnitril, Vinylidenchlorids mit Hexafluorpropylen, Vinylidenfluorids mit Hexafluorpropylen und einem Mitglied ausgewählt aus der Gruppe bestehend aus Vinylfluorid, Tetrafluorethylen und einem Trifluorethylen, wie sie beispielsweise in der US 5,540,741 und der US 5,478,668 beschrieben sind, verwendet. Unter diesen wiederum bevorzugt sind Copolymerisate uas Vinylidenfluorid (1,1-Difluorethen) und Hexafluorpropen, weiter bevorzugt statistische Copolymerisate aus Vinylidenchlorid und Hexafluorpropen, wobei der Gewichtsanteil des Vinylidenfluorid 75 bis 92% und der des Hexafluorpropen 8 bis 25% beträgt.

Diese Polymere, wie auch die Kondensationsprodukte V werden nach herkömmlicher, dem Fachmann wohl bekannter Art polymerisiert, vorzugsweise radikalisch polymerisiert, wobei bezüglich der erhaltenen Molekulargewichte das hierin bezüglich der Verbindung VIII Gesagte gilt.

Die Dicke der Separatorschicht B beträgt im allgemeinen 5 bis 100 µm, insbesondere 10 bis 50 µm.

<u>Anodenschicht C und Kathodenschicht D</u>

Als polymeres Bindemittel innerhalb dieser Schichten C und D können alle bekannten Polymere eingesetzt werden, die unter den Betriebsbedingungen von Batterien elektrochemisch, mechanisch und thermisch stabil sind und eine ausreichende Bindemittelwirkung besitzen. Dabei können die in den Schichten C und D eingesetzten polymeren Bindemittel gleich oder verschieden voneinander sein.

Insbesondere zu nennen sind:

1) Homo-, Block- oder Copolymere IV erhältlich durch Polymerisation der oben definierten Mischungen I.

2) Homo-, Block- und Copolymere, hergestellt aus halogenhaltigen olefinischen Verbindungen wie Vinylchlorid, Vinylfluorid, Vinylidenfluorid, Vinylidenchlorid, Hexafluoropropen, Trifluoropropen, 1,2-Dichloroethen, 1,2-Difluoroethen, Tetrafluoroethen.
Unter diesen bevorzugt sind statistische Copolymere aus Vinylidenfluorid und Hexafluorpropylen, insbesondere solche, die einen Gehalt an Hexafluorpropen von 8 bis 25 Gew.-% und einen Gehalt an Vinylidenfluorid von 75 bis 92 Gew.-%, jeweils bezogen auf das Gesamtgewicht des Copolymers, aufweisen.

3) Darüber hinaus können auch konventionelle, schichtförmige Kathoden und Anoden, wie sie beispielsweise in den Beispielen aufgeführt sind, eingesetzt werden.

Die Kathodenschicht C enthält eine für Kathoden herkömmlicherweise verwendete elektronenleitende, elektrochemisch aktive Verbindung (Kathodenverbindung), die in der Lage ist, beim Laden Elektronen aufzunehmen, vorzugsweise eine Lithiumverbindung. Zu nennen sind dabei insbesondere: $LiCoO_2$, $LiNiO_2$, $LiNi_xCo_yO_2$, $LiNi_xCo_yAl_zO_2$, mit $0<x,y,z\leq 1$, $Li_xMnO_2$ $(0<x\leq 1)$, $Li_xMn_2O_4$ $(0<x\leq 2)$, $Li_xMoO_2$ $(0<x\leq 2)$, $Li_xMnO_3$ $(0<x\leq 1)$, $Li_xMnO_2$ $(0<x\leq 2)$, $Li_xMn_2O_4$ $(0<x\leq 2)$, $Li_xV_2O_4$

(0<x≤2.5), $Li_xV_2O_3$ (0<x≤3.5), $Li_xVO_2$ (0<x≤1), $Li_xWO_2$ (0<x≤1), $Li_xWO_3$ (0<x≤1), $Li_xTiO_2$ (0<x≤1), $Li_xTi_2O_4$ (0<x≤2), $Li_xRuO_2$ (0<x≤1), $Li_xFe_2O_3$ (0<x≤2), $Li_xFe_3O_4$ (0<x≤2), $Li_xCr_2O_3$ (0<x≤3), $Li_xCr_3O_4$ (0<x≤3.8), $Li_xV_3S_5$ (0<x≤1.8), $Li_xTa_2S_2$ (0<x≤1), $Li_xFeS$ (0<x≤1), $Li_xFeS_2$ (0<x≤1), $Li_xNbS_2$ (0<x≤2.4), $Li_xMoS_2$ (0<x≤3), $Li_xTiS_2$ (0<x≤2), $Li_xZrS_2$ (0<x≤2), $Li_xNbSe_2$ (0<x≤3), $Li_xVSe_2$ (0<x≤1), $Li_xNiPS_2$ (0<x≤1,.5), $Li_xFePS_2$ (0<x≤1.5).

Die Anodenschicht D enthält eine übliche, aus dem Stand der Technik bekannte elektronenleitende elektrochemisch aktive Verbindung (Anodenverbindung), die in der Lage ist, beim Laden Elektronen abzugeben, wobei insbesondere die folgenden zu nennen sind:

> Lithium, Lithium enthaltende Metallegierungen, micronisierter Kohlenstoffruß, natürlicher und synthetischer Graphit, synthetisch graphitierter Kohlestaub und Kohlefasern, Oxide, wie Titanoxid, Zinkoxid, Zinnoxid, Molybdenoxid, Wolframoxid, Carbonate, wie Titancarbonat, Molybdencarbonat, und Zinkcarbonat.

Die Anodenschicht D enthält ferner bis zu 30 Gew.-%, bezogen auf das Gesamtgewicht der sie konstituierenden Materialien (polymeres Bindemittel plus Anodenverbindung), Leitruß und ggf. übliche Zusatzstoffe. Die Kathodenschicht C enthält, bezogen auf das Gesamtgewicht der sie konstituierenden Materialien (polymeres Bindemittel plus Kathodenverbindung), 0,1 bis 20 Gew.-% Leitruß.

<u>Haftvermittelnde Schicht E</u>

Als haftvermittelnde Schicht E können prinzipiell alle Materialien verwendet werden, die in der Lage sind, die mindestens eine erste Schicht, wie oben definiert, sowie die mindestens eine zweite Schicht, wie oben definiert, miteinander zu verbinden, wie z.B. Schmelzklebstoffe, Heißsiegeklebstoffe, Kontaktklebstoffe, Haftklebstoffe, Dispersionshaftklebstoffe und Epoxid-Klebstoffe.

Weitere Details bzgl. der erfindungsgemäß verwendbaren Materialien in der haftvermittelnden Schicht lassen sich einem Artikel mit dem Titel "Kleben und Klebestoffe" (Chemie in unserer Zeit, Heft 4 (1980)), sowie Ullmann, Encyklopädie der technischen Chemie, 4. Auflage (1977), Bd. 14, S. 227-268 sowie der darin zitierten Literatur PCT/EP98/06394 entnehmen.

Wie eingangs bereits ausgeführt, ist das erfindungsgemäße Verfahren dadurch gekennzeichnet, daß die hierin definierten Schichten durch ein sogenanntes Naß-in-Naß-Beschichtungsverfahren miteinander in Kontakt gebracht werden. Die Prinzipien eines derartigen Verfahrens sind in EP-B 0 520 155, insbesondere auf der Seite 34, beschrieben. Bei dem Naß-in-Naß-Beschichtungsverfahren werden die benötigten Schichten mit hoher Effizienz aufeinander aufgebracht. Dabei bedeutet "Naß-in-Naß", daß nach dem Aufbringen von z. B. einer Anodenschicht D auf z.B. eine Ableiteranode die Separatorschicht B bereits zu einem Zeitpunkt aufgebracht wird, zu dem die Anodenschicht noch nicht vollständig getrocknet ist.

Dabei werden die einzelnen Schichten mit herkömmlichen Beschichtungsvorrichtungen, wie z.B. einer Walzenbeschichtungsvorrichtung, einem Rakel, einer Extrusionsbeschichtungsvorrichtung, aufgebracht. Ferner können die beiden Schichten auch nahezu gleichzeitig mit einem einzigen Beschichtungskopf mit zwei Ausgängen oder einer Extrusionsbeschichtungsvorrichtung mit einer Back-up-Walze aufgebracht werden. Derartige Vorrichtungen sind ebenfalls detailliert in der in der EP-B 0 520 155 an der angegebenen Stelle zitierten Literatur beschrieben.

Um die Agglomerierung des Feststoffs bzw. der in der Kathoden- und Anodenschicht enthaltenen Kathoden- bzw. Anodenverbindung wird vorzugsweise innerhalb der Beschichtungsvorrichtung bzw. der Beschichtungsköpfe die aufzubringende Zusammensetzung Scherkräften ausgesetzt. Der Begriff "Naß-Zustand" bedeutet im Kontext der vorliegenden Anmeldung, daß die aufgebrachte Zusammensetzung sich beim Betasten mit der Hand noch klebrig anfühlt bzw. an der Hand haftet. In diesem sogenannten "Naß-Zustand" weist die aufgebrachte Zusammensetzung im allgemeinen immer noch 5 bis 10 % des dieser vor der Beschichtung zugesetzten Lösungsmittels auf.

Insbesondere betrifft die vorliegende Erfindung ein Verfahren zur Herstellung von Verbundkörpern, die die folgende Struktur aufweisen:

> Ableiterkathode
> eine Kathodenschicht C,
> eine Separatorschicht B,
> eine Anodenschicht D, und
> Ableiteranode.

In einer weiteren Ausführungsform der vorliegenden Erfindung enthält die Separatorschicht B, die Kathodenschicht C und die Anodenschicht D jeweils das bereits oben definierte statistische Copolymerisat aus Vinylidenfluorid und Hexafluorpropylen mit einem Gehalt an Hexafluorpropen von 8 bis 25 Gew.-%, bezogen auf das Gesamtgewicht des Copolymerisats.

Der verbindungsgemäße Verbundkörper kann zusätzlich einen Weichmacher enthalten. Derartige geeignete Weichmacher sind in der WO99/19917 und der WO99/18625 beschrieben.

Vorzugsweise werden als Weichmacher Dimethylcarbonat, Diethylcarbonat, Dipropylcarbonat, Diisopropylcarbonat, Dibutylcarbonat, Ethylencarbonat, Propylencarbonat; Ether, wie z.B. Dibutylether, Di-tert.-butylether, Dipentylether, Dihexylether, Diheptylether, Dioctylether, Dinonylether, Didecylether, Didodecylether, Ethylenglycoldimethylether, Ethylenglycoldiethylether, 1-tert.-Butoxy-2-methoxyethan, 1-tert.-Butoxy-2-ethoxyethan, 1,2-Dimethoxypropan, 2-Methoxyethylether, 2-Ethoxyethylether; Oligoalkylenoxidether, wie z. B. Diethylenglycoldibutylether, Dimethylenglycol-tert.-butylmethylether, Triethylenglycoldimethylether, Tetraethylenglycoldimethylether, γ-Butyrolacton, Dimethylformamid; Kohlenwasserstoffe der allgemeinen Formel $C_nH_{2n+2}$ mit $7 < n < 50$; organische Phosphorverbindungen, insbesondere Phosphate und Phosphonate, wie z.B. Trimethylphosphat, Triethylphosphat, Tripropylphosphat, Tributylphosphat, Triisobutylphosphat, Tripentylphosphat, Trihexylphosphat, Trioctylphosphat, Tris(2-ethylhexyl)phosphat, Tridecylphosphat, Diethyl-n-butylphosphat, Tris(butoxyethyl)phosphat, Tris(2-methoxyethyl)phosphat, Tris(tetrahydrofuryl)phosphat, Tris(1H,1H,5H-octafluorpentyl)phosphat, Tris-(1H,1H-trifluorethyl)phosphat, Tris(2-(diethylamino)ethyl)phosphat, Diethylethylphosphonat, Dipropylpropylphosphonat, Dibutylbutylphosphonat, Dihexylhexylphosphonat, Dioctyloctylphosphonat, Ethyldimethylphosphonoacetat, Methyldiethylphosphonoacetat, Triethylphosphonoacetat, Dimethyl(2-oxbpropyl)phosphonat, Diethyl (2-oxopropyl)phosphonat, Dipropyl(2-oxopropyl)phosphonat, Ethyldiethoxyphosphinylformiat, Trimethylphosphonoacetat, Triethylphosphonoacetat, Tripropylphosphonoacetat, Tributylphosphonoacetat eingesetzt. Bevorzugt sind Trialkylphosphate und Carbonate.

Der Gehalt an Weichmachern in der jeweiligen Schicht beträgt, bezogen auf das darin befindliche Gemisch bzw. das die Schicht konstituierende Material (polymeres Bindemittel plus Kathoden- bzw. Anodenmaterial) 0 bis 200 Gew.- %, vorzugsweise 0 bis 100 Gew.-% und weiter bevorzugt 0 bis 70 Gew.- %.

Die für die jeweiligen Schichten verwendeten Ausgangsmaterialien können in einem anorganischen, vorzugsweise einem organischen flüssigen Verdünnungsmittel gelöst oder dispergiert werden, wobei die resultierende Lösung eine Viskosität von vorzugsweise 100 bis 50.000 mPas aufweisen sollte, und anschließend in an sich bekannter Weise, wie Spritzbeschichtung, Gießen, Tauchen, Spincoaten, Walzenbeschichtung, Bedrucken im Hoch-, Tief oder Flachdruck oder Siebdruckverfahren, oder auch durch Extrusion ggfls. auf ein Trägermaterial aufgetragen werden, d.h. zu einen folienförmigen Gebilde verformt werden. Die weitere Verarbeitung kann wie üblich erfolgen, z.B. durch Entfemen des Verdünnungsmittels und Aushärten der Materialien.

Als organische Verdünnungsmittel eignen sich aliphatische Ether, insbesondere Tetrahydrofuran und Dioxan, Kohlenwasserstoffe, insbesondere Kohlenwasserstoffgemische wie Benzin, Toluol und Xylol, aliphatische Ester, insbesondere Ethylacetat und Butylacetat und Ketone, insbesondere Aceton, Ethylmethylketon und Cyclohexanon. Es können auch Kombinationen solcher Verdünnungsmittel eingesetzt werden.

Nach der Folienbildung können flüchtige Komponenten, wie Lösungsmittel oder Weichmacher, entfernt werden.

Sofern eine Vernetzung der Schichten erwünscht ist kann eine solche in an sich bekannter Weise erfolgen, beispielsweise durch Bestrahlung mit ionischer oder ionisierender Strahlung, Elektronenstrahl, vorzugsweise mit einer Beschleunigungsspannung zwischen 20 und 2.000 kV und einer Strahlendosis zwischen 5 und 50 Mrad, UV- oder sichtbarem Licht, wobei in üblicher Weise vorteilhaft ein Initiator wie Benzildimethylketal oder 1,3,5-Trimethylbenzoyl-triphenylphosphinoxid in Mengen von insbesondere höchstens 1 Gew.-% bezogen auf die zu vernetzenden Bestandteile in den Ausgangsmaterialien zugegeben werden und die Vernetzung innerhalb von im allgemeinen 0,5 bis 15 Minuten vorteilhaft unter Inertgas wie Stickstoff oder Argon durchgeführt werden kann; durch thermische radikalische Polymersation, vorzugsweise bei Temperaturen von über 60 °C, wobei man vorteilhaft einen Initiator wie Azo-bis-isobutyronitril in Mengen von im allgemeinen höchstens 5 Gew.-%, vorzugsweise 0,05 bis 1 Gew.-% bezogen auf die zu vernetzenden Bestandteile in den Ausgangsmaterialien zugeben kann; durch elektrochemisch induzierte Polymerisation; oder durch ionische Polymerisation erfolgen, beispielsweise durch säurekatalysierte kationische Polymerisation, wobei als Katalysator in erster Linie Säuren, vorzugsweise Lewissäuren wie $BF_3$, oder insbesondere $LiBF_4$ oder $LiPF_6$ in Betracht kommen. Lithiumionen enthaltende Katalysatoren wie $LiBF_4$ oder $LiPF_6$ können dabei vorteilhaft im Festelektrolyt oder Separator als Leitsalz verbleiben.

Ferner können die hierin beschriebenen Schichten eine dissoziierbare, Lithiumkationen enthaltende Verbindung ein sogenanntes Leitsalz, und ggf. weitere Zusatzstoffe, wie insbesondere organische Lösungsmittel, einen sogenannter Elektrolyt, enthalten.

Diese Stoffe können teilweise oder vollständig bei der Herstellung der Schicht der Mischung beigemischt oder nach der Herstellung der Schicht in diese eingebracht werden.

Als Leitsalze können die allgemein bekannten und beispielsweise in der EP-A 0 096 629 beschriebenen Leitsalze verwendet werden. Vorzugsweise werden erfindungsgemäß als Leitsalz $LiPF_6$, $LiBF_4$, $LiClO_4$, $LiAsF_6$, $LiCF_3SO_3$, $LiC(CF_3SO_2)_3$, $LiN(CF_3SO_2)_2$, $LiN(SO_2C_nF_{2n+1})_2$, $LiC[(C_nF_{2n+1})SO_2]_3$, $Li(C_nF_{2n+1})SO_3$, mit n jeweils 2 bis 20, $LiN(SO_2F)_2$, $LiAlCl_4$, $LiSiF_6$, $LiSbF_6$ oder ein Gemisch aus zwei oder mehr davon eingesetzt, wobei als Leitsalz vorzugsweise $LiBF_4$ oder $LiPF_6$ eingesetzt wird.

Diese Leitsalze werden in Mengen von 0,1 bis 50 Gew.-%, vorzugsweise 0,1 bis 20 Gew.-%, insbeondere 1 bis 10 Gew.-%, jeweils bezogen auf das die jeweilige Schicht bildende Material, eingesetzt.

Die den erfindungsgemäßen Verbundkörper bildenden Schichten weisen im allgemeinen eine Dicke von 5 bis 500 µm auf, vorzugsweise 10 bis 500 µm, weiter bevorzugt 10 bis 200 µm. Der Verbundkörper, vorzugsweise in Form einer Folie, liegt im allgemeinen in einer Gesamtdicke von 15 bis 1500 µm, insbesondere mit einer Gesamtdicke von 50 bis 500 µm vor.

Gegenüber den bisherigen Verfahren zur Herstellung derartiger Verbundkörper bzw. für Festelektrolyte/Separatoren weist das hierin beanspruchte Verfahren insbesondere die folgenden Vorteile auf:

- Bei dem hier vorliegenden Naß-in-Naß-Beschichtungsverfahren können die einzelnen Schichten kurz nacheinander oder sogar simultan aufgebracht werden; es handelt sich somit um ein äußerst effektives Verfahren zur Herstellung derartiger Verbundkörper.
- Bedingt durch die Tatsache, daß die in Rede stehenden Schichten bereits auf eine mechanisch stabile Substratfolie aufgetragen werden, ist es nicht notwendig, daß die Schichten an sich mechanisch stabil sein müssen.
- Um einen mechanisch stabilen Verbundkörper zu erhalten, ist es im Rahmen der vorliegenden Erfindung nicht notwendig, einen Laminier-Schritt durchzuführen,
- Das erfindungsgemäße Verfahren kann mit herkömmlichen Vorrichtungen zur Beschichtung durchgeführt werden.
- Bei Verwendung insbesondere der als Weichmacher explizit aufgeführten Trialkylphosphaten und Carbonaten ist darüber hinaus kein Extraktionsschritt im Anschluß an die Herstellung der einzelnen Schichten bzw. des Verbundkörpers nötig.

BEISPIELE

Beispiel 1

Auf eine noch nicht vollständig getrocknete Elektrode, bestehend aus einer Kupferfolie (15 µm), die mit einer Suspension bestehend aus

| | |
|---|---|
| 200 g | MCMB-Graphit |
| 10 g | Leitruß |
| 6 g | PVDF |
| 250 g | NMP |

beschichtet wurde, wurde eine Suspension bestehend aus

| | |
|---|---|
| 35 g | Kynarflex® 2801 |
| 50 g | Wollastonit Tremin® 800 EST |
| 15 g | Tris(2-ethylhexyl)phosphat |
| 200 g | Toluol |

aufgerakelt. Die Elektrode wurde anschließend bei erhöhten Temperaturen (ca. 50 bis 150°C) und reduziertem Druck getrocknet.

Beispiel 2

Auf eine Kupferfolie (15 µm) wurde zunächst eine Elektrode bestehend aus:

| | |
|---|---|
| 5600 g | MCMB-Graphit (Osaka Gas) |
| 1500 g | Kynar® 2801 (Elf Atochem) |
| 400 g | Leitruß Super® P (MMM Carbon) |
| 5000 g | Propylencarbonat |

und direkt anschließend ein Separator bestehend aus:

| | |
|---|---|
| 3000 g | Kynar® 2801 (Elf Atochem) |
| 2000 g | Aerosil® 8200 (Degussa) |
| 5000 g | Propylencarbonat |

unter Verwendung von zwei Zweiwellenextruderanlagen und einer Chill-Roll-Anlage coextrudiert. Die Innentemperatur im Extruder und in der Breitschlitzdüse lag bei etwa 130 bis 150°C. Der haftfeste Verbund bestehend aus Kupferfolie, Elektrode und Separator hat eine Foliendicke von 250 bis 300 µm.

**Patentansprüche**

**1.** Verfahren zur Herstellung eines Verbundkörpers umfassend

A) mindestens eine Substratfolie A, und darauf aufgebracht,

B) mindestens eine Separatorschicht B, die eine Mischung I, enthaltend ein Gemisch II, bestehend aus

a) 1 bis 95 Gew.-% eines Feststoffs III, vorzugsweise eines basischen Feststoffs III, mit einer Primärpartikelgröße von 5 nm bis 20 µm und

b) 5 bis 99 Gew.-% einer polymeren Masse IV, erhältlich durch Polymerisation von

b1) 5 bis 100 Gew.-% bezogen auf die Masse IV eines Kondensationsprodukts V aus

α) mindestens einer Verbindung VI, die in der Lage ist mit einer Carbonsäure oder einer Sulfonsäure oder einem Derivat oder einem Gemisch aus zwei oder mehr davon zu reagieren, und

β) mindestens 1 Mol pro Mol der Verbindung VI einer Carbonsäure oder Sulfonsäure VII, die mindestens eine radikalisch polymerisierbare funktionelle Gruppe aufweist, oder eines Derivats davon oder eines Gemischs aus zwei oder mehr davon

und

b2) 0 bis 95 Gew.-% bezogen auf die Masse IV einer weiteren Verbindung VIII mit einem mittleren Molekulargewicht (Zahlenmittel) von mindestens 5.000 mit Polyethersegmenten in Haupt- oder Seitenkette, wobei der Gewichtsanteil des Gemisches II an der Mischung I 1 bis 100 Gew.-% beträgt,

oder
ein Polymer oder Copolymer des Vinylchlorids, Acrylnitrils, Vinylidenfluorids, Vinylchlorids mit Vinylidenchlorid, Vinylchlorids mit Acrylnitril, vmylidenchlorids mit Hexafluorpropylen, Vinylidenfluorids mit Hexafluorpropylen und einem Mitglied ausgewählt aus der Gruppe bestehend aus Vinylfluorid, Tetrafluorethylen und einem Trifluorethylen
enthält,
und wobei die Schicht frei ist von einer elektronenleitenden, elektrochemisch aktiven Verbindung, und

C) mindestens eine Kathodenschicht C, die eine elektronenleitende, elektrochemisch aktive Verbindung, die in der Lage ist, beim Laden Lithiumionen abzugeben, enthält, oder

D) mindestens eine Anodenschicht D, die eine elektronenleitende, elektrochemische Verbindung, die in der Lage ist beim Laden Lithiumionen aufzunehmen, enthält, oder
mindestens eine Kathodenschicht C und mindestens eine Anodenschicht D,

**dadurch gekennzeichnet, daß** die mindestens eine Separatorschicht B und die mindestens eine Kathodenschicht C oder die mindestens eine Anodenschicht D oder die mindestens eine Kathodenschicht C und die mindestens eine Anodenschicht D durch ein Naß-in-Naß-Beschichtungsverfahren miteinander in Kontakt gebracht werden,
wobei die Beschichtung im Naß-Zustand noch 5 bis 10% des dieser vor der Beschichtung zugesetzten Lösungsmittels aufweist.

**2.** Verfahren nach Anspruch 1, wobei der Verbundkörper ferner mindestens eine haftvermittelnde Schicht E umfaßt.

**3.** Verfahren nach Anspruch 1 oder 2, wobei die mindestens eine Substratfolie A eine folienformige Ableiterelektrode ist.

**4.** Verfahren nach einem der Ansprüche 1 bis 3, wobei die mindestens eine Separatorschicht B ein statistisches Copolymer aus Vinylidenfluorid und Hexafluorpropen mit einem Gehalt an Hexafluorpropen von 8 bis 25 Gew.-%, bezogen auf das Gesamtgewicht des Copolymers, umfaßt.

**5.** Verfahren nach einem der Ansprüche 1 bis 4, wobei der Verbundkörper die folgende Struktur aufweist:

Ableiterkathode
eine Kathodenschicht C,
eine Separatorschicht B,
eine Anodenschicht D, und
Ableiteranode.

**6.** Verfahren nach Anspruch 5, wobei die Separatorschicht B, die Kathodenschicht C und die Anodenschicht D jeweils ein statistisches Copolymerisat aus Vinylidenfluorid und Hexafluorpropen mit einem Gehalt an Hexafluorpropen von 8 bis 25 Gew.-%, bezogen auf das Gesamtgewicht des Copolymerisats, umfassen.

## Claims

**1.** A process for the production of a composite article comprising

A) at least one substrate film A and, applied thereto,

B) at least one separator layer B which comprises a mixture I comprising a mixture II consisting of

a) from 1 to 95% by weight of a solid III, preferably a basic solid III, having a primary particle size of from 5 nm to 20 μm, and

b) from 5 to 99% by weight of a polymeric composition IV obtainable by polymerization of

b1) from 5 to 100% by weight, based on the composition IV, of a condensation product V of

α) at least one compound VI which is capable of reacting with a carboxylic acid or a sulfonic acid or a derivative or a mixture of two or more thereof, and

β) at least 1 mol per mole of the compound VI, of a carboxylic acid or sulfonic acid VII containing at least one free-radical-polymerizable functional group, or of a derivative thereof or of a mixture of two or more thereof,

and

b2) from 0 to 95% by weight, based on the composition IV, of a further compound VIII having a mean molecular weight (number average) of at least 5000 containing polyether segments in the main or side chain,

where the proportion by weight of the mixture II in the mixture I is from 1 to 100% by weight, or
a polymer or copolymer of vinyl chloride, acrylonitrile, vinylidene fluoride, vinyl chloride with vinylidene chloride, vinyl chloride with acrylonitrile, vinylidene chloride with hexafluoropropylene, vinylidene fluoride with hexafluoropropylene and a member selected from the group consisting of vinyl fluoride, tetrafluoroethylene and a trifluoroethylene,
and where the layer comprises no electron-conducting, electrochemically active compound, and

C) at least one negative-electrode layer C which comprises an electron-conducting, electrochemically active compound which is capable of releasing lithium ions during charging, or

D) at least one positive-electrode layer D which comprises an electron-conducting, electrochemical compound which is capable of taking up lithium ions during charging, or
at least one negative-electrode layer C and at least one positive-electrode layer D,

**characterized in that** the at least one separator layer B and the at least one negative-electrode layer C or the at least one positive-electrode layer D or the at least one negative-electrode layer C and the at least one positive-electrode layer D are brought into contact with one another by a wet-on-wet coating process,
wherein the coating in the wet state still contains from 5 to 10% of the solvent added thereto before the coating.

2. A process as claimed in claim 1, wherein the composite article furthermore comprises at least one adhesion-promoting layer E.

3. A process as claimed in claim 1 or 2, wherein the at least one substrate film A is a film-form collector electrode.

4. A process as claimed in any one of claims 1 to 3, wherein the at least one separator layer B comprises a random copolymer of vinylidene fluoride and hexafluoropropene having a content of hexafluoropropene of from 8 to 25% by weight, based on the total weight of the copolymer.

5. A process as claimed in any one of claims 1 to 4, wherein the composite article has the following structure:

collector negative electrode
a negative-electrode layer C,
a separator layer B,
a positive-electrode layer D, and
collector positive electrode.

6. A process as claimed in claim 5, wherein the separator layer B, the negative-electrode layer C and the positive-electrode layer D each comprise a random copolymer of vinylidene fluoride and hexafluoropropene having a content of hexafluoropropene of from 8 to 25% by weight, based on the total weight of the copolymer.

## Revendications

1. Procédé pour la préparation d'un corps composite comprenant

A) au moins une feuille de support A et, appliquées sur celle-ci,
B) au moins une couche de séparation B qui contient
un mélange I contenant lui-même un mélange II qui consiste en

a) 1 à 95% en poids d'une substance solide III, de préférence une substance solide basique III, à une dimension de particule primaire de 5 nm à 20 μm, et
b) 5 à 99% en poids d'une masse polymère IV obtenue par polymérisation de
b1) 5 à 100% en poids, par rapport à la masse IV, d'un produit de condensation V de

α) au moins un composé VI, capable de réagir avec un acide carboxylique ou un acide sulfonique ou un dérivé ou un mélange de deux ou plusieurs d'entre eux, et
β) au moins une mole, par mole du composé VI, d'un acide carboxylique

ou d'un acide sulfonique VII qui contient au moins un groupe fonctionnel apte à la polymérisation radicalaire, ou un dérivé d'un tel acide ou un mélange de deux ou plusieurs d'entre eux, et

b2) 0 à 95% en poids, par rapport à la masse IV, d'un autre composé VIII ayant un poids moléculaire moyen (moyenne en nombre) d'au moins 5000 et contenant des segments de polyéther dans la chaîne principale ou dans une chaîne latérale, le poids du mélange II représentant de 1 à 100% du poids du mélange I, ou bien

un polymère ou copolymère du chlorure de vinyle, de l'acrylonitrile, du fluorure de vinylidène, du chlorure de vinyle ou du chlorure de vinylidène, du chlorure de vinyle et de l'acrylonitrile, du chlorure de vinylidène et de l'hexafluoropropylène, du fluorure de vinylidène et de l'hexafluoropropylène et d'un monomère choisi dans le groupe consistant en le fluorure de vinyle, le tétrafluoréthylène et un trifloréthylène, la couche étant exempte de tout composé possédant une activité électrochimique et conducteur des électrons, et
C) au moins une couche cathodique C qui contient un composé possédant l'activité électrochimique et conduisant les électrons et capable de libérer à la charge des ions lithium, ou bien
D) au moins une couche anodique D qui contient un composé possédant l'activité électrochimique et conduisant les électrons, et capable d'absorber à la charge des ions lithium, ou bien

au moins une couche cathodique C et au moins une couche anodique D,

**caractérisé en ce que** au moins une couche séparatrice B et au moins une couche cathodique C ou au moins une couche anodique D ou au moins une couche cathodique C et au moins une couche anodique A sont mises en contact entre elles par une technique de revêtement au mouillé-sur-mouillé,

le revêtement à l'état mouillé contenant encore 5 à 10% du solvant ajouté avant le revêtement.

**2.** Procédé selon la revendication 1, selon lequel le corps composite contient encore au moins une couche E conférant l'adhérence.

**3.** Procédé selon la revendication 1 ou 2, selon lequel au moins une feuille de support A consiste en une électrode de dérivation en forme de feuille.

**4.** Procédé selon l'une des revendications 1 à 3, selon lequel au moins une couche de séparation B consiste en un copolymère statistique du fluorure de vinylidène et de l'hexafluoropropylène à une teneur en ce dernier de 8 à 25% du poids total du copolymère.

**5.** Procédé selon l'une des revendications 1 à 4, selon lequel le corps composite possède la structure suivante :

- cathode de dérivation,
- une couche cathodique C,
- une couche de séparation B,
- une couche anodique D et
- une anode de dérivation.

**6.** Procédé selon la revendication 5, selon lequel la couche de séparation B, la couche cathodique C et la couche anodique D consistent chacune en un copolymère statistique du fluorure de vinylidène et de l'hexafluoropropylène à une teneur en ce dernier représentant de 8 à 25% du poids total du copolymère.